# EUROPÄISCHE PATENTANMELDUNG

(11) **EP 3 073 167 A1**
(43) Veröffentlichungstag der Anmeldung: **28.09.2016**
(21) Anmeldenummer: 15175218.5
(22) Anmeldetag: 03.07.2015
(51) Int. Cl.: F16L 23/14, F24F 13/02

(54) **FLANSCHVERBINDUNG**

(30) Priorität: 25.03.2015 DE 102015003761
(71) Anmelder: b.arc GmbH, 16928 Pritzwalk-Falkenhagen (DE)
(72) Erfinder: Bodien, Wolfgang, 14612 Falkensee (DE)
(74) Vertreter: Müller, Eckhard

(57) **Zusammenfassung**

Die Erfindung betrifft eine Flanschverbindung (100), aufweisend ein Profilpaar, wobei zwischen den Profilen (12, 13) ein zumindest teilweise mit einem Abdichtmittel (15) versehener Eckbereich eines Eckwinkels (11) angeordnet ist, wobei das Abdichtmittel (15) aus einem erkalteten heißviskosen Acrylat gebildet ist. Um die die Dichtigkeit einer derartigen Flanschverbindung (100) weiter zu verbessern, schlägt die Erfindung vor, dass zumindest teilweise auf dem Abdichtmittel (15) ein weiteres Abdichtmittel (16) in Form eines elastischen Kunststoffs aufgebracht ist.

## Beschreibung

Die Erfindung betrifft eine Flanschverbindung, aufweisend ein Profilpaar, wobei zwischen den Profilen ein zumindest teilweise mit einem Abdichtmittel versehener Eckbereich eines Eckwinkels angeordnet ist, wobei das Abdichtmittel aus einem erkalteten heißviskosen Acrylat gebildet ist.

Zudem betrifft die Erfindung einen Lüftungskanal mit Seitenwänden und einer Flanschverbindung mit einem Profilpaar, wobei zwischen den Profilen ein zumindest teilweise mit einem Abdichtmittel versehener Eckbereich eines Eckwinkels angeordnet ist, wobei das Abdichtmittel aus einem erkalteten heißviskosen Acrylat gebildet ist.

Zur Verbesserung der Dichtigkeit einer Flanschverbindung ist man in der DE 10 2012 104 205 A1 dazu übergegangen, ein Abdichtmittel aus einem erkalteten heißviskosen Acrylat zu verwenden. Hierzu wird zunächst zumindest teilweise das heißviskose Acrylat auf den Eckbereich des Eckwinkels der Flanschverbindung aufgetragen. Weitere Auftragsstellen und Auftragspunkte können die Außenseiten der Profile und der Übergang zwischen Eckwinkel und Außenseite der Profile sein. Danach wird auf das aufgetragene Acrylat eine Teflonschicht aufgebracht und die aufgebrachte Teflonschicht abgekühlt. Schließlich wird die Teflonschicht von dem aufgetragenen Acrylat entfernt. Als Acrylate bieten sich dabei insbesondere Klebstoffe an, die sich aus Ethylene-Ethylhexyl-Acrylate zusammensetzen.

Die DE 10 2012 104 205 A1 zeigt, dass die Dichtigkeit von Flanschverbindungen insbesondere auf dem technischen Gebiet des Lüftungskanalbaus eine große Relevanz besitzt, wobei Flanschverbindungen der eingangs genannten Art insbesondere wichtige Komponenten beim stabilen Zusammenbau von zwei benachbarten Kanalteilstücken von Klimatisierungskanälen sind. Die mit dem heißviskosen Acrylat versehenen Flanschverbindungen bestehen aus an den Enden der Kanalstücke rahmenartig angeformten oder gesteckten Profilen. Zum Verbinden derartiger Flanschprofilrahmen benachbarter Kanalteilstücke greifen an jeder Ecke Schenkel von Eckwinkeln in die Flansche, sodass der außerhalb der Flansche liegende Eckbereich des Eckwinkels zwischen den Profilen angeordnet ist. Da ein Hauptaugenmerk im Stand der Technik weiterhin auf die ständige Verbesserung der Dichtigkeit der Flanschverbindungen gerichtet ist, ist es Aufgabe der vorliegenden Erfindung, die Dichtigkeit einer Flanschverbindung der eingangs genannten Art weiter zu verbessern.

Diese Aufgabe wird mit den Merkmalen des Anspruchs 1 gelöst. Vorteilhafte Ausgestaltungen der Erfindung ergeben sich aus den Unteransprüchen.

Die Erfindung sieht vor, dass zumindest teilweise auf dem Abdichtmittel ein weiteres Abdichtmittel in Form eines elastischen Kunststoffs aufgebracht ist. Grundlegende Idee der Erfindung ist es, das erkaltete heißviskose Acrylat zusätzlich mit einem Abdichtmittel zumindest teilweise zu bedecken, sodass eine Schichtabfolge von Dichtmitteln entsteht, deren untere Schicht das erkaltete heißviskose Acrylat ist. Durch die Elastizität der oberen Schicht, d.h. der Kunststoffschicht, ist gewährleistet, dass die Dichtigkeit einschränkende Formänderungen der mit dem erkalteten heißviskosen Acrylat versehenen Flanschverbindung kompensiert werden.

Eine vorteilhafte Ausgestaltung der Erfindung sieht vor, dass das Abdichtmittel und das weitere Abdichtmittel miteinander verklebt sind. Zweckmäßigerweise ist dabei das weitere Abdichtmittel ein Kautschuk, insbesondere ein synthetischer Kautschuk. Die Verklebung kann vollflächig erfolgen. Eine praktikable Variante der Erfindung sieht dabei vor, dass das weitere Abdichtmittel, das vorzugsweise in Form eines Zuschnitts vorliegt, partielle Klebeflächen aufweist. Die partiellen Klebeflächen können dabei am Rand des Zuschnitts verlaufen und zusammen rechteckförmig sein, sodass ein klebefreier Bereich verbleibt, der Formänderungen im Bereich der Flanschverbindung ermöglicht.

Eine weitere vorteilhafte Ausgestaltung der Erfindung sieht vor, dass an der dem Winkelbereich zugewandten Ecke der Profile und des Eckwinkels Dichtleisten angeordnet sind, die einteilig miteinander verbunden sind. Dichtleisten sind aus dem Stand der Technik bekannt. Diese sind jedoch in den Eckbereichen der Flanschverbindung über Kreuz, d.h. zweiteilig angeordnet. Gemäß der Erfindung verlaufen die Dichtleisten in den Eckbereichen der Flanschverbindung dagegen bogenförmig und ununterbrochen, d.h. sie liegen auch in Gestalt einer Endlosdichtung (Kammerprofil) vor, was wiederum die Dichtigkeit in dem Eckbereich weiter erhöht. Die vorzugsweise auf Gärung geschnittenen Enden können ebenfalls mit einer Alufolie geschützt werden.

Zweckmäßigerweise ist an der dem Winkelbereich zugewandten Ecke der Profile und des Eckwinkels sich ein nach unten erstreckender Zuschnitt einer Alufolie angeordnet. Durch die Anordnung der Alufolie wird das Abdichtmittel aus dem elastischen Kunststoff, das vorzugsweise in Form einer Membran auf dem Abdichtmittel aus dem erkalteten heißviskosen Material aufgebracht ist, im Bauteilinnenbereich vor Beschädigungen während der regelmäßig eintretenden Reinigungsarbeiten geschützt. Vorteilhafterweise erstreckt sich der Zuschnitt der Alufolie dabei auch auf die Oberfläche des Eckwinkels und/oder der Profile.

Eine weitere praktikable Variante der Erfindung sieht vor, dass die Außenflächen der Profile sowie der Übergang zwischen den Profilen und dem Eckbereich mit dem Abdichtmittel aus dem erkalteten heißviskosen Acrylat und dem weiteren Abdichtmittel in Form des elastischen Kunststoffs versehen sind.

Zweckmäßigerweise sind die Kanten der Membran zumindest teilweise abgedichtet. Als weiteres Abdichtmittel dient dabei vorzugsweise ein MEZ-Plast, das vorteilhafterweise mit einem dünnen Pinsel oder einer Kartusche aufgebracht wird.

Die Dichtmembran ist vorzugsweise ein Butylband, das im Stand der Technik unter dem Namen ductsave 23.15 bekannt ist.

Ein Lüftungskanal mit Kanalinnenwänden und einer Flanschverbindung mit einem Profilpaar, bei dem zwischen den Profilen ein zumindest teilweise mit einem Abdichtmittel versehener Eckbereich eines Eckwinkels angeordnet ist, wobei das Abdichtmittel aus einem erkalteten heißviskosen Acrylat gebildet ist, ist Gegenstand von Anspruch 11. Der Lüftungskanal zeichnet sich dadurch aus, dass zumindest teilweise auf dem Abdichtmittel ein weiteres Abdichtmittel in Form eines elastischen Kunststoffs aufgebracht ist. Vorzugsweise ist dabei an der dem Winkelbereich zugewandten Ecke der Profile und des Eckwinkels ein sich nach unten erstreckender Zuschnitt einer Alufolie angeordnet, der mit mindestens einer Kanalinnenwand verbunden ist.

Weitere Ziele, Vorteile, Merkmale und Anwendungsmöglichkeiten der vorliegenden Erfindung ergeben sich aus der nachfolgenden Beschreibung von Ausführungsbeispielen anhand der Figuren. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigt in schematischer Darstellung:
- Fig. 1: in einer Draufsicht eine Flanschverbindung mit einem Eckwinkel ohne ein Abdichtmittel;
- Fig. 2: in einer Draufsicht die Flanschverbindung aus Fig. 1 mit einem Abdichtmittel gemäß dem Stand der Technik;
- Fig. 3: in einer perspektivischen Ansicht eine erfindungsgemäße Flanschverbindung;
- Fig. 4: in einer perspektivischen Ansicht eine weitere Ausführungsform einer Flanschverbindung gemäß der Erfindung;
- Fig. 5: in einer perspektivischen Ansicht eine weitere Ausführungsform einer Flanschverbindung gemäß der Erfindung und
- Fig. 6: in einer perspektivischen Ansicht einen Teilausschnitt eines Profils aus Figur 5.

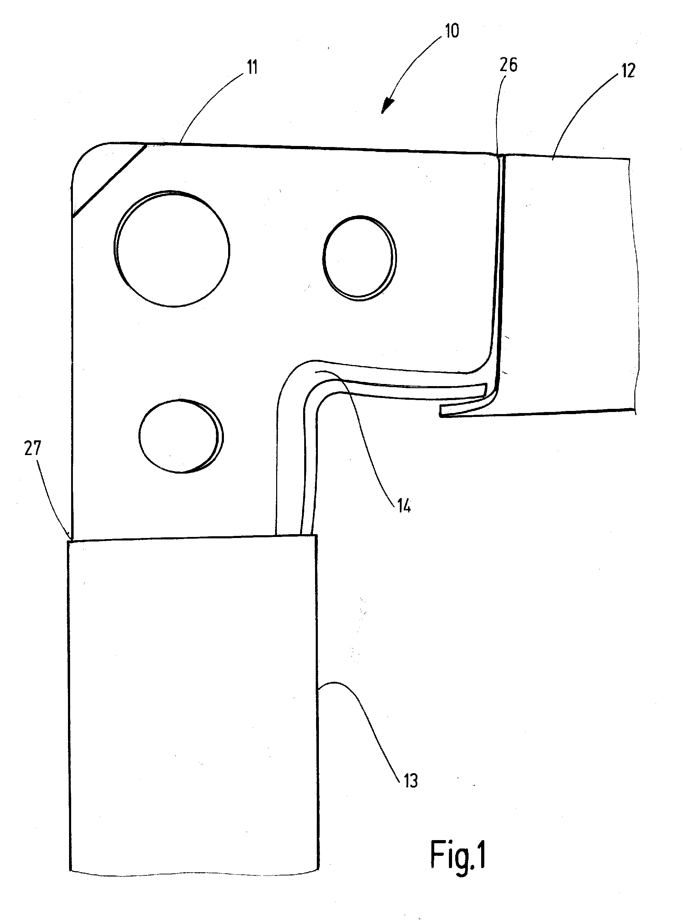

Figur 1 zeigt eine herkömmliche Flanschverbindung, die mit dem Bezugszeichen 10 versehen ist. Die Flanschverbindung 10 weist ein die Profile 12, 13 auf, zwischen denen der mit Löchern versehene Eckwinkel 11 angeordnet ist. Der Eckwinkel 11 weist in Figur 1 nicht gezeigte Schenkel auf, die in die Profile 12, 13 eingeführt sind. Die 12, 13 Profile sind in Figur 1 nicht dargestellten Kanalseiten eines Lüftungskanals zugeordnet und können als Steckprofile vorliegen oder können alternativ auch an Kanalseitenwänden angeformt sein.

Wie aus Figur 1 weiter hervorgeht sind zwischen den den Profilen 12, 13 und dem Eckwinkel 11 Fugen 26, 27 ausgebildet, die den Grenzbereich zwischen den Profilen 12, 13 und dem Eckwinkel 11 markieren.

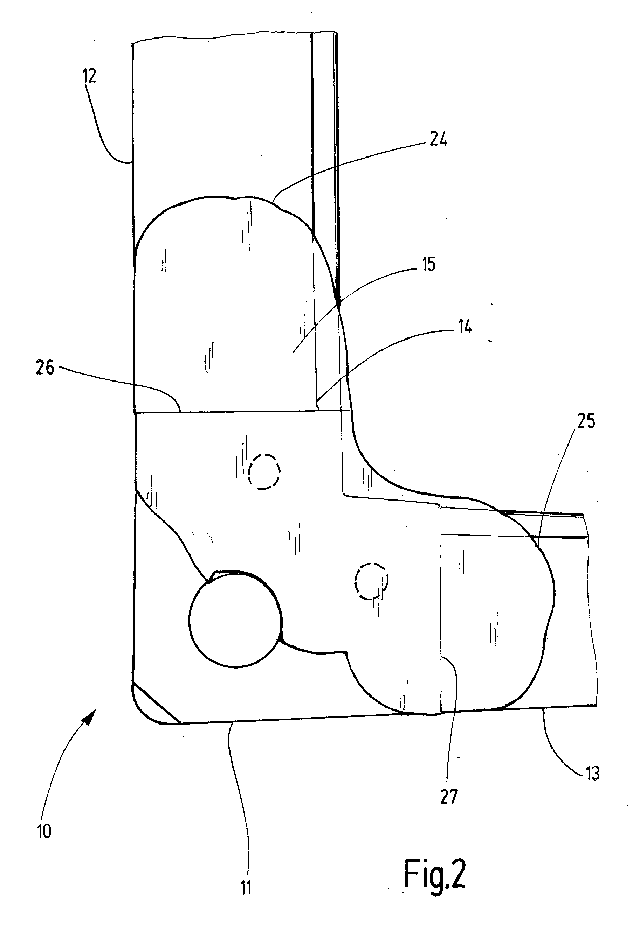

In Figur 2 ist die mit einem Abdichtmittel 15 versehene Flanschverbindung 10 aus Figur 1 dargestellt, wie sie im Stand der Technik vorzufinden ist. Das Abdichtmittel 15 ist aus einem heißviskosen Material gebildet. Der Eckbereich mit dem Eckwinkel 11 ist, wie Figur 2 weiter verdeutlicht, nicht vollflächig mit dem Abdichtmittel 15 bedeckt. Der dem dem Winkelbereich abgewandten Teil des Eckwinkels 11 ist nicht mit dem Abdichtmittel 15 versehen. Dagegen ist auch der Übergangsbereich zwischen den Profilen 12, 13 und dem Eckwinkel 11, d.h. die Fugen 26, 27, mit dem Abdichtmittel 15 versehen.

Auch ein kleiner Teil der Außenflächen der Profile 12, 13 und Teile der sich nach unten erstreckenden Eckwinkelinnenflächen 14 im Winkelbereich sind mit dem Abdichtmittel 15 bedeckt. Die Kanten 24, 25 des Abdichtmittels 15 markieren den Übergang zwischen dem mit dem Abdichtmittel 15 bedeckten Bereich der Profile 12, 13 und dem nicht mit dem Abdichtmittel 15 versehenen Teil der Profile 12, 13.

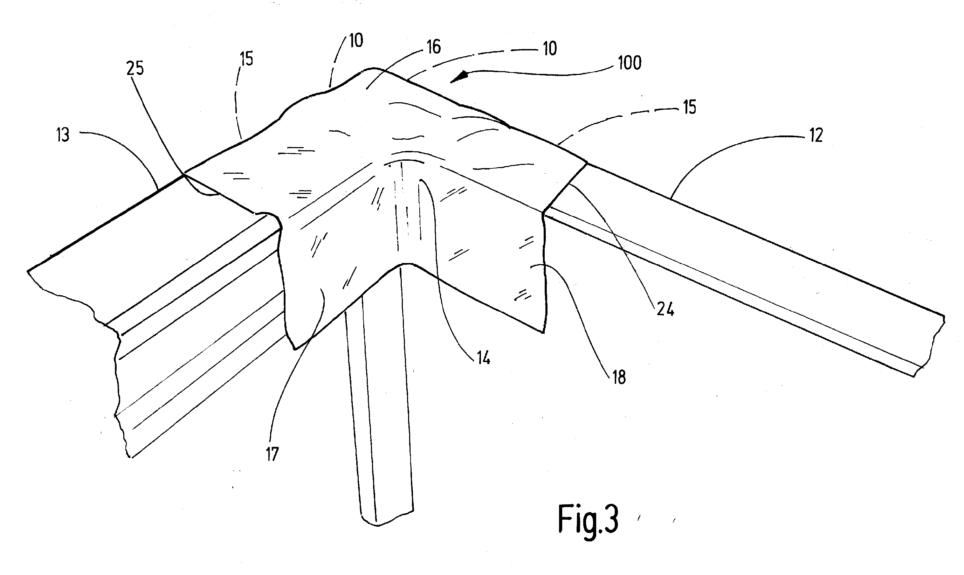

Figur 3 verdeutlicht eine erste Ausführungsform der erfindungsgemäßen Flanschverbindung, die mit dem Bezugszeichen 100 gekennzeichnet ist. Die Flanschverbindung 100 weist ebenfalls ein Profilpaar auf, wobei zwischen den Profilen 12, 13 der zumindest teilweise mit dem Abdichtmittel 15 versehener Eckbereich des Eckwinkels 11 angeordnet ist. Das Abdichtmittel 15 ist auch hier aus einem erkalteten heißviskosen Acrylat gebildet.

In erfindungswesentlicher Weise ist, wie Figur 3 weiter verdeutlicht, auf dem Abdichtmittel 15 das weitere Abdichtmittel 16 in Form eines elastischen Kunststoffs aufgebracht, sodass das erkaltete heißviskose Acrylat zusätzlich mit dem Abdichtmittel 16 bedeckt ist. Somit ist eine Schichtabfolge von Abdichtmitteln 15, 16 gegeben, deren untere Schicht das erkaltete heißviskose Acrylat und die obere Schicht der elastische Kunststoff sind. Bei der in Figur 3 gezeigten Ausführungsform ist das Abdichtmittel 16 als Membran auf das Abdichtmittel 15 aufgebracht und zwar derart, dass sich an der Eckwinkelinnenfläche 14 im Winkelbereich Membranflächen 17, 18 ein Stück weit nach unten erstrecken.

Das Abdichtmittel 15 und das darauf liegende weitere Abdichtmittel 16 sind miteinander verklebt. Die Verklebung kann vollflächig zwischen dem Abdichtmittel 15 und dem darauf aufgebrachten Abdichtmittel 16 erfolgen. In der in Figur 3 gezeigten Ausführungsform der Erfindung weist das weitere Abdichtmittel 16, das als Membran vorliegt, partielle Klebeflächen auf, die allerdings in Figur 3 nicht gezeigt sind. Die partiellen Klebeflächen sind an dem als Membran ausgebildeten Abdichtmittel angebracht und befinden sich unterhalb des Abdichtmittels 16, d.h. zwischen Abdichtmittel 15 und dem darauf aufgebrachten Abdichtmittel 16. Die partiellen Klebeflächen verlaufen am Rand der Membran, sodass ein klebefreier Bereich verbleibt, der Formänderungen im Bereich der Flanschverbindung 100 ermöglicht. Wie aus Figur 3 weiter hervorgeht, erstreckt sich das als Membran ausgebildete Abdichtmittel 16 mit seinen Membranflächen 17, 18 im Winkelbereich nach unten und liegt an den Eckwinkelinnenflächen 14 an.

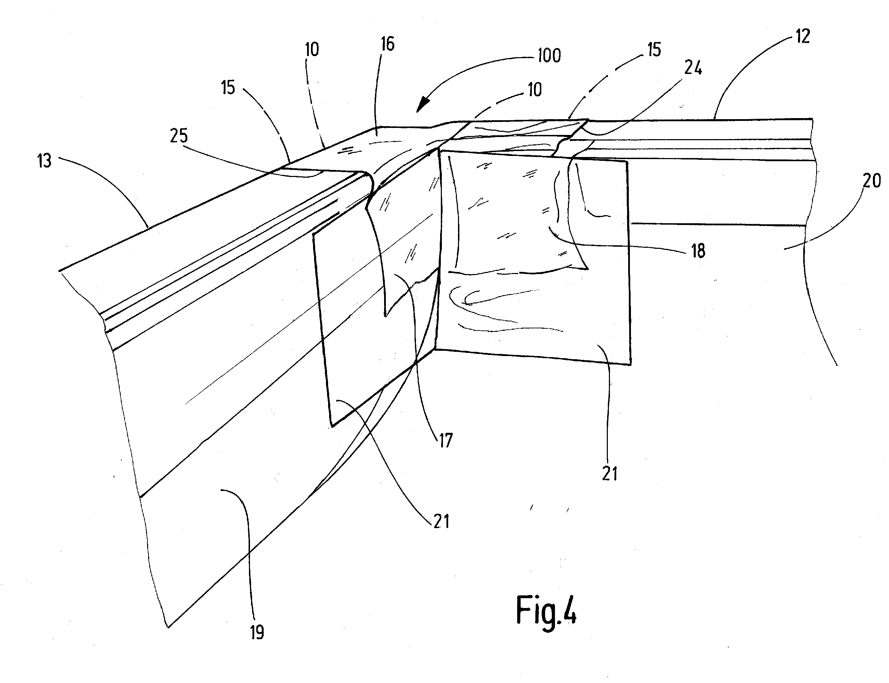

Figur 4 zeigt eine weitere Ausführungsform der erfindungsgemäßen Flanschverbindung. Bei dieser Flanschverbindung 100 ist an der dem Winkelbereich zugewandten Ecke der Profile 12, 13 und des Eckwinkels 11 ein sich nach unten erstreckender Zuschnitt einer Alufolie 21 angeordnet. Durch die Alufolie 21 wird das Abdichtmittel 16 aus dem elastischen Kunststoff, das auch in der in Figur 4 gezeigten Ausführungsform in Form einer Membran auf dem Abdichtmittel aus dem heißviskosen Material aufgebracht ist, in dem Lüftungskanalinnenbereich, der u.a. durch die Kanalinnenseiten 19, 20 begrenzt ist, vor Beschädigungen während der regelmäßig eintretenden Reinigungsarbeiten geschützt. Der Zuschnitt der Alufolie 21 kann sich erstreckt dabei auch, was allerdings in Figur 4 nicht gezeigt ist, auf die Oberfläche des Eckwinkels 11 und/oder der Profile 12, 13 erstrecken. Die Alufolie 21 ist mit den Kanalinnenseiten 19, 20 klebend verbunden. Die Kanten 24, 25 der Membran sind mit einem MEZ-Plast abgedichtet.

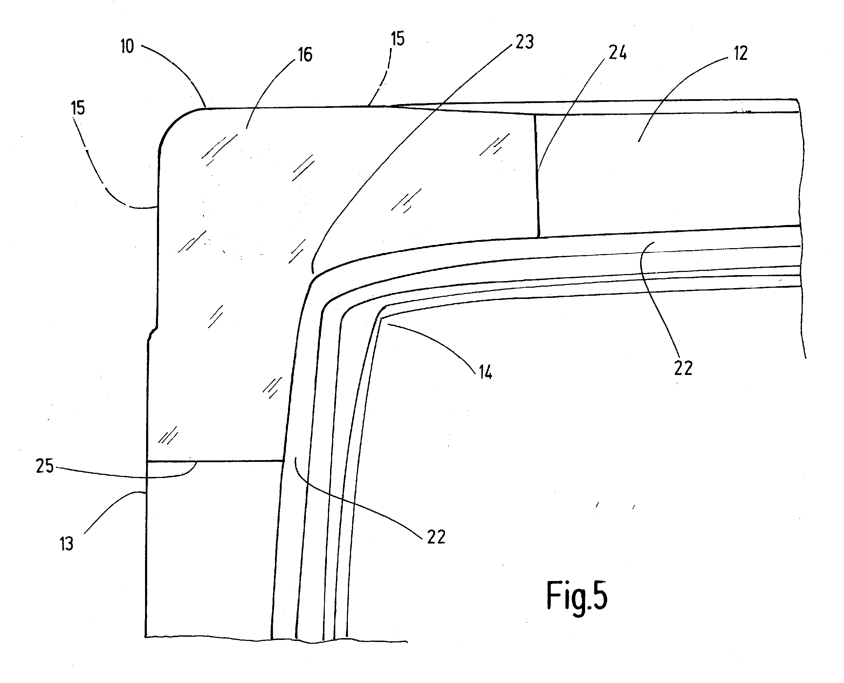

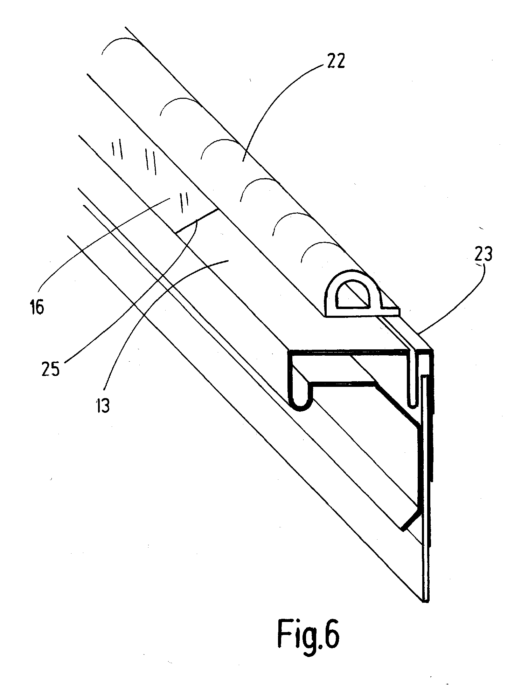

An der dem Winkelbereich zugewandten Ecke der Profile 12, 13 und des Eckwinkels 11 sind, wie die Figur 5 verdeutlicht, Dichtleisten 22 an der Profilinnenkante 23 und an der Eckwinkelinnenkante angeordnet sind, die einteilig miteinander verbunden sind. Die Dichtleisten 22 in dem Eckbereich der Flanschverbindung 100 verlaufen bogenförmig und ununterbrochen, d.h. sie liegen in Gestalt einer Endlosdichtung (Kammerprofil) vor, was die Dichtigkeit in dem Eckbereich der Flanschverbindung 100 weiter erhöht. Die auf Gärung geschnittenen Enden der an der Profilinnenkante 23 Dichtleiste 22 (Figur 6) können ebenfalls mit einer Alufolie geschützt werden.

Die vorliegende Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei anders gearteten Ausführungen Gebrauch machen. Beispielsweise können in den Prozess des Vergiessens noch vorgelagerte und nachgelagerte Prozesse wie die Vormontage der Bauteile und Maschinen und deren Nachheizen integriert sein. Beispielweise können bei der Flanschverbindung zusätzlich Kanalklammern, wie beispielsweise in der DE 10 2013 112 175.6 offenbart, und eine Kammerdichtung vorgesehen sein.

### Bezugszeichenliste

- 100: Flanschverbindung
- 10: Flanschverbindung
- 11: Eckwinkel
- 12: Profil
- 13: Profil
- 14: Eckwinkelinnenflächen
- 15: Abdichtmittel
- 16: Abdichtmittel
- 17: Membranfläche
- 18: Membranfläche
- 19: Kanalseitenwand
- 20: Kanalseitenwand
- 21: Alufolie
- 22: Dichtleiste
- 23: Profilinnenkante
- 24: Kante
- 25: Kante
- 26: Fuge
- 27: Fuge

## Patentansprüche

1. Flanschverbindung (100), aufweisend ein Profilpaar, wobei zwischen den Profilen (12, 13) ein zumindest teilweise mit einem Abdichtmittel (15) versehener Eckbereich eines Eckwinkels (11) angeordnet ist, wobei das Abdichtmittel (15) aus einem erkalteten heißviskosen Acrylat gebildet ist, **dadurch gekennzeichnet, dass** zumindest teilweise auf dem Abdichtmittel (15) ein weiteres Abdichtmittel (16) in Form eines elastischen Kunststoffs aufgebracht ist.

2. Verbindung nach Anspruch 1, **dadurch gekennzeichnet, dass** das Abdichtmittel (15) und das weitere Abdichtmittel (16) miteinander verklebt sind.

3. Verbindung nach Anspruch 2, **dadurch gekennzeichnet, dass** das Klebemittel ein synthetischer Kautschuk ist.

4. Verbindung nach einem der Ansprüche 1 bis 3, **dadurch gekennzeichnet, dass** das weitere Abdichtmittel (16) partielle Klebeflächen aufweist.

5. Verbindung nach einem der vorhergehenden Ansprüche, **dadurch gekennzeichnet, dass** an der dem Winkelbereich zugewandten Ecke der Profile (12, 13) und des Eckwinkels (11) Dichtleisten (22) angeordnet sind, die einteilig miteinander verbunden sind.

6. Verbindung nach einem der vorhergehenden Ansprüche, **dadurch gekennzeichnet, dass** an der dem Winkelbereich zugewandten Ecke der Profile (12, 13) und des Eckwinkels (11) sich ein nach unten erstreckender Zuschnitt einer Alufolie (21) angeordnet ist.

7. Verbindung nach Anspruch 6, **dadurch gekennzeichnet, dass** sich der Zuschnitt auf die Oberfläche des Eckwinkels (11) und/oder der Profile (12, 13) erstreckt.

8. Verbindung nach einem der vorhergehenden Ansprüche, **dadurch gekennzeichnet, dass** die Außenflächen der Profile (12, 13) mit dem Abdichtmittel (15) aus dem erkalteten heißviskosen Acrylat und dem weiteren Abdichtmittel (16) in Form des elastischen Kunststoffs versehen sind.

9. Verbindung nach einem der vorhergehenden Anspruche, **dadurch gekennzeichnet, dass** der elastische Kunststoff in Form einer Membran auf dem Abdichtmittel (15) aus dem erkalteten heißviskosen Acrylat aufgebracht ist.

10. Verbindung nach Anspruch 9, dass die Kanten (24, 25) der Membran zumindest teilweise abgedichtet sind.

11. Lüftungskanal mit Kanalinnenwänden (19, 20) und einer Flanschverbindung (100) mit einem Profilpaar, wobei zwischen den Profilen (12, 13) ein zumindest teilweise mit einem Abdichtmittel (15) versehener Eckbereich eines Eckwinkels (11) angeordnet ist, wobei das Abdichtmittel (15) aus einem erkalteten heißviskosen Acrylat gebildet ist, **dadurch gekennzeichnet, dass** zumindest teilweise auf dem Abdichtmittel (15) ein weiteres Abdichtmittel (16) in Form eines elastischen Kunststoffs aufgebracht ist.

12. Kanal nach Anspruch 11, **dadurch gekennzeichnet, dass** an der dem Winkelbereich zugewandten Ecke der Profile (12, 13) und des Eckwinkels (11) sich ein nach unten erstreckender Zuschnitt einer Alufolie (21) angeordnet ist, der mit mindestens einer Kanalinnenwand (19, 20) verbunden ist.

13. Kanal nach Anspruch 12, **dadurch gekennzeichnet, dass** sich der Zuschnitt auf die Oberfläche des Eckwinkels (11) und/oder der Profile (12, 13) erstreckt.

14. Kanal nach einem der Ansprüche 12 oder 13, **dadurch gekennzeichnet, dass** der elastische Kunststoff in Form einer Membran auf dem Abdichtmittel (15) aus dem erkalteten heißviskosen Acrylat aufgebracht ist.
